# EUROPÄISCHE PATENTANMELDUNG

(11) **EP 1 134 923 A1**
(43) Veröffentlichungstag der Anmeldung: **19.09.2001**
(21) Anmeldenummer: 00440078.4
(22) Anmeldetag: 17.03.2000
(51) Int. Cl.: H04J 3/16

(54) **Verfahren und Multiplexer zum Übertragen von asynchronen Datenpaketen über ein synchrones digitales Nachrichtenübertragungsnetz**

(71) Anmelder: ALCATEL, 75008 Paris (FR)
(72) Erfinder: Heuer, Volkmar, 71254 Ditzingen (DE)
(74) Vertreter: Urlichs, Stefan, Dipl.-Phys.

(57) **Zusammenfassung**

Bei einem Verfahren zum Übertragen von asynchronen Datenpaketen wie z.B. IP-Paketen über ein synchrones digitales Nachrichtenübertragungsnetz wie z.B. ein SDH oder SONET-System, werden die Datenpakete von einem Multiplexer über eine asynchrone Datenleitung wie z.B. eine Ethernet-Leitung empfangen werden, die eine vorgegebene maximale Übertragungsrate unterstützt (10, 100 oder 1000 Mbit/sec). Die Datenpakete werden in virtuelle Container verpackt und die virtuellen Container gemäß einer Multiplexhierarchie in einem Übertragungsrahmen verschachtelt übertragen, in dessen Nutzlastbereich sie frei positionierbar sind und von einem Zeiger adressiert werden.

Dabei werden die Datenpakete byteweise in eine Anzahl virtueller Container gleicher Größe verpackt und die Container miteinander verkettet werden, wobei die Anzahl nach der Bedingung festgelegt wird, daß die resultierende Übertragungskapazität der verketteten Container im wesentlichen der maximalen Übertragungsrate der asynchronen Datenleitung entspricht, und wobei freie Datenbytes mit einem vorgegebenen Füllmuster (z.B. hex00) gefüllt werden.

## Beschreibung

Die Erfindung betrifft ein Verfahren zur Übertragung von asynchronen Datenpakten über ein synchrones digitales Nachrichtenübertragungsnetz nach dem Oberbegriff des Anspruchs 1 sowie einen Multiplexer für ein synchrones digitales Nachrichtenübertragungsnetz mit einer Schnittstelle für asynchrone Datenpakete nach dem Oberbegriff von Anspruch 17.

Ein synchrones digitales Nachrichtenübertragungsnetz arbeitet beispielsweise nach den Empfehlungen der ITU-T für SDH (Synchrone Digitale Hierarchie) oder SONET (Synchronous Optical Network). Dabei werden Nutzinformationen in einen Nutzlastbereich von sogenannten Containern gepackt. Die Container erhalten einen als "Path Overhead" bezeichneten Kopfbereich mit dem zusammen sie als virtuelle Container VC-N bezeichnet werden. Es gibt virtuelle Container der Typen VC-11, VC-12, VC-2, VC-3 und VC-4. Die virtuellen Container werden in einem als Synchrones Transportmodul STM-N bezeichneten Übertragungsrahmen übertragen, wobei die virtuellen Container beliebig im Nutzlastbereich der Transportmodule positioniert sein können und von einem Zeiger im Kopfbereich (Overhead) der Transportmodule adressiert werden. Kleinere virtuelle Container sind dabei stets in größere virtuelle Container verschachtelt. Ein synchrones Transportmodul bei SDH besitzt beispielsweise immer einen virtuellen Container VC-4. Bei SONET hingegen sind in jedem Transportmodul stets drei VC-3 enthalten, der VC-4 existiert bei SONET nicht. Die geschilderte Multiplexhierachie von SDH und SONET ist in ITU-T G.707 Kapitel 6 ausführlich geschildert.

Synchrone digitale Nachrichtenübertragungsnetze sind zum Transport beliebiger Nutzlastsignale ausgelegt. Zunehmend werden solche Transportnetze auch als sogenannte Backbone-Netze für Datenverkehr im Internet und für lokale Datennetze eingesetzt. Dabei werden Datenpakete, die nach dem Internet-Protokoll (IP) strukturiert sind, als Nutzinformation transportiert. Entweder werden die IP-Pakete zunächst in ATM-Zellen verpackt und dann die ATM-Zellen als Nutzinformation übertragen oder aber werden die IP-Pakete direkt in synchrone Transportmodule verpackt und übertragen. Für die zweite Lösung wurde in von W. Simpson in IETF RFC 1619 (Internet Engineer Task Force Request for Comments 1619) die Verwendung des sogenannten PPP-Protokolls (Point-to-Point) vorgeschlagen. Dieser Vorschlag verwendet eine Basis-Übertragungsrate von 155,520 Mbit/sec. Für niedrigere Übertragungsraten sollen entsprechende virtuelle Container verwendet werden.

Ein Nachteil dieses Vorschlages besteht darin, daß die Übertragungsrate von 155,520 Mbit/sec und ebenso die Übertragungsraten der virtuellen Container nicht an die maximal möglichen Übertragungsraten angepaßt sind, die für IP-Verkehr über Ethernet-Schnittstellen realisiert sind (10Mbit/sec, 100Mbit/sec oder 1G/sec). Daher muß in dem synchronen digitalen Nachrichtenübertragungsnetz entweder eine Verbindung mit größere Übertragungsrate eingerichtet werden als maximal mit über eine Ethernet-Schnittstelle empfangenen IP-Paketen belegt werden kann oder es wird eine Verbindung mit niedrigerer Übertragungsrate eingerichtet so daß ein Flaschenhals im Backbone-Netz entsteht.

Aus dem Artikel "The Cisco ISR 3303 Integrated SONET Router" vom 24.03.1999, erhältlich über das Internet unter http://www.cisco.com/waro/public/728/isr3303/3303_tc.htm, ist ein IP-Router bekannt, der als Netzelement eines SONET-Netzes arbeitet. Er empfängt IP-Pakete über eine asynchrone Datenschnittstelle und verpackt diese unter Verwendung einer HDLC-ähnlichen Einrahmung in virtuelle Container vom Typ VC-11 (= VT1.5). Entsprechend dem SONET-Standard werden die virtuellen Container gemäß der SONET-Multiplexhierarchie in einem Übertragungsrahmen verschachtelt übertragen, in dessen Nutzlastbereich sie frei positionierbar sind und von einem Zeiger adressiert werden. Es können je nach erforderlicher Bandbreite zwischen ein und acht unabhängige VC-11 zum Transport der IP-Pakete verwendet werden, wobei eine Verbindung mit mehr als einem VC-1 1 durch Verwendung des sogenannten ML-PPP (MultiLink Point-to-Point Protocol) unterstützt wird. Das ML-PPP realisiert auf höherer Protokollebene eine Punkt-zu-Punkt-Verbindung für IP-Pakete über mehr als eine physikalische Verbindung (OSI Layer 1). Dieses Verfahren erfordert jedoch spezielle gleichartige Netzelemente für Datenquelle und Datensenke und ist auf den Spezialfall für 10 Mbit Ethernet beschränkt. Zudem ist das Verfahren technisch aufwendig, da auf höherer Protokollebene mehrere Verbindungen zusammengefaßt werden müssen. Zudem wird durch das ML-PPP zusätzlicher Overhead produziert.

Aufgabe der vorliegenden Erfindung ist es, ein Verfahren anzugeben, nach dem asynchrone Datenpakete effizienter über ein synchrones digitales Nachrichtenübertragungsnetz übertragen werden können. Insbesondere ist es eine Aufgabe der Erfindung, ein Verfahren anzugeben, nach dem IP-Pakete, die über eine asynchrone Datenleitung empfangen werden, mit der auf der asynchronen Datenleitung maximal zur Verfügung stehenden Übertragungsrate über das Transportnetz transportiert werden können. Weitere Aufgaben der Erfindung bestehen darin, einen für ein digitales synchrones Nachrichtenübertragungsnetz anzugeben, mit dem asynchrone Datenpakete effizienter übertragen werden können.

Die Aufgabe wird hinsichtlich des Verfahrens gelöst durch die Merkmale des Anspruchs 1 und hinsichtlich des Multiplexers durch die Merkmale des Anspruchs 17. Vorteilhafte Ausgestaltungen sind den abhängigen Ansprüchen zu entnehmen.

Im folgenden wird die Erfindung anhand der Figuren 1 bis 5 in mehreren Ausführungsbeispielen erläutert. Es zeigt:
- Figur 1:: Ein zum Transport von asynchronen Datenpaketen eingesetztes synchrones Transportnetz,
- Figur 2:: ein logisches Blockdiagramm eines Netzelementes, das eine transparente Bridge für die asynchronen Datenpakete schaltet,
- Figur 3:: ein logisches Blockdiagramm eines Netzelementes, das gleichzeitig zwei transparenten Brigdes für asynchrone Datenleitungen unterschiedlicher Kapazität schaltet,
- Figur 4:: eine logische Sicht des Netzwerkes vom Blickpunkt des asynchronen Datennetzes aus,
- Figur 5:: eine logische Sicht des Netzwerkes vom Blickpunkt des synchronen Transportnetzes aus und
- Figur 6:: ein logisches Blockdiagramm eines weiteren Ausführungsbeispiels eines Netzelementes, das gleichzeitig zwei transparenten Brigdes für asynchrone Datenleitungen mit der maximalen Datenrate von 1000 Mbit/sec schaltet,
- Figur 7:: das Mapping von IP-Paketen in den Nutzlastbereich eines virtuellen Containers.

Um Nutzlastsignale transportieren zu können, die eine größere Übertragungskapazität als 145 Mbit/sec (VC-4) in SDH oder 45 Mbit/sec (VC-3) in SONET benötigen, wurde die Möglichkeit einer Verkettung mehrerer virtueller Container geschaffen. Zwei Arten der Verkettung virtueller Container sind bekannt: virtuelle Verkettung ("virtual concatenation") und nahtlose Verkettung ("contiguous concatenation"). Bei nahtloser Verkettung werden die verketteten Container aneinander angrenzend im selben Transportmodul transportiert. In zwischengeschalteten Netzelementen im Übertragungspfad darf nur der Zeiger auf den ersten virtuellen Container der Verkettung zum Ausgleich von Taktdifferenzen angepaßt werden, die übrigen Container der Verkettung müssen entsprechend verändert werden, so daß die Phasenbeziehung der Container zueinander während der gesamten Übertragung erhalten bleibt. Im als Datensenke arbeitenden Netzelement müssen daher keine Phasenunterschiede zwischen den virtuellen Containern ausgeglichen werden. Bei virtueller Verkettung können die einzelnen virtuellen Container unabhängig von einander transportiert werden und Laufzeitunterschiede durch Zeigeraktionen werden im empfangenden Netzelement durch Zwischenspeicherung ausgeglichen.

Eine asynchrone Datenleitung eines lokalen Datennetzes, das nach dem Ethernet-Standard (IEEE 802.3) arbeitet, liefert keinen konstanten Datenstrom sondern weist nur eine maximale Datenrate von 10, 100 oder 1000 Mbit/sec auf.

Die Erfindung macht sich nun die Verkettung virtueller Container zunutze, um einen transparenten Übertragungspfad für asynchrone Datenpakete einzurichten. Dabei besteht ein Grundgedanke der Erfindung darin, eine Anzahl virtueller Container zu verketten, so daß die Gesamtübertragungskapazität der verketteten virtuellen Container zumindest in etwa der maximalen Übertragungsrate der asynchronen Datenleitung, über die die Datenpakete empfangen wurden, entspricht. Dadurch wird für asynchrone Datenpakete eine sogenannte transparente "Bridge" durch das synchrone digitale Nachrichtenübertragungsnetz (Transportnetz) geschaltet. Eine Zwischenspeicherung der Datenpakete kann entfallen oder bleibt zumindest auf einen Pufferspeicher geringer Größe (Speichertiefe nur einiger weniger Datenpakete) beschränkt, so daß Laufzeitverzögerungen bei der Übertragung gering bleiben. Die Bridge ist an die maximale Datenrate angepaßt, so daß die Übertragung durch das synchrone digitale Nachrichtenübertragungsnetz keinen Flaschenhals darstellt. Ebensowenig muß im Transportnetz eine ungenutzte Überkapazität bereitgestellt werden.

Zur Übertragung der Datenpakete wird die virtuelle Verkettung wegen ihrer höheren Flexibilität bevorzugt. Vorteilhaft wird für Datenpakete aus einem 10Mbit/sec-Ethernet eine virtuelle Verkettung von zwei VC-2 vorgesehen (VC-2-2v) oder von fünf VC-12 (VC-12-5v). Für 100Mbit/sec-Ethernet ist vorteilhaft eine virtuelle Verkettung von 15, 16 oder 17 VC-2 (VC-2-15v, VC-2-16v oder VC-2-17v) vorgesehen, wobei sich im Betrieb 15 als optimale Anzahl von verketteten Containern erweisen könnte, oder von zwei virtuellen Containern vom Typ VC-3 (VC-3-2v). Für 1 Gbit/sec-Ethernet oder 1000Mbit/sec-Ethernet wird eine virtuelle Verkettung von acht VC-4 (VC-4-8v) empfohlen. Für die zur Zeit in die Entwicklung befindliche Übertragungsrate von 10Gbit/sec oder 10.000Mbit/sec wird eine Verkettung von sechzehn VC-4-4c (VC-4-4c-16v), von vier VC-4-16c (VC-4-16c-4v) oder eine Verkettung von vierundsechzig VC-4 (VC-4-64v) vorgeschlagen.

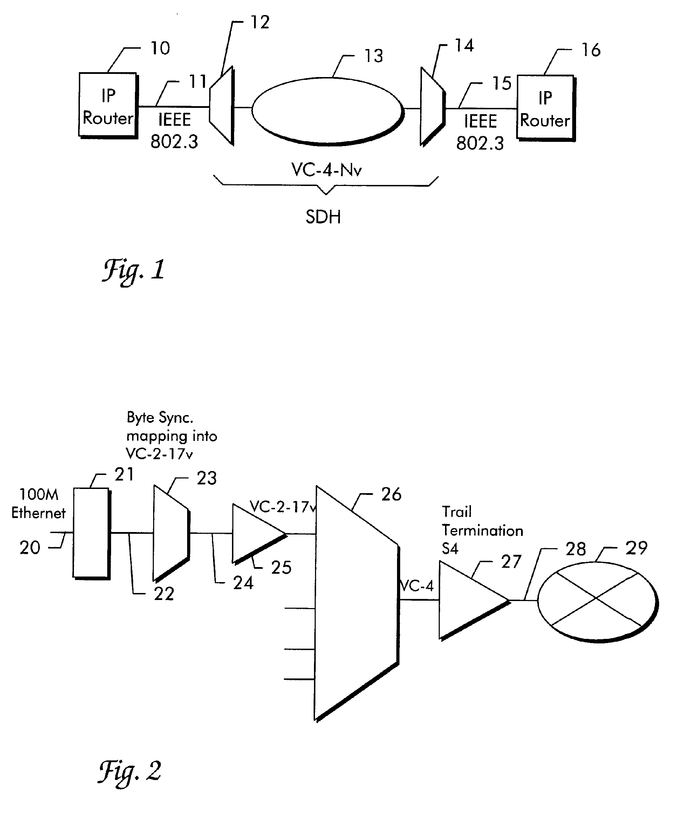

In Figur 1 ist gezeigt, wie asynchrone Datenpakete zwischen zwei lokalen Datennetzen über ein synchrones digitales Nachrichtenübertragungsnetz SDH 13 gemäß der Erfindung übertragen werden. Von den lokalen Datennetzen sind beispielhaft nur die Router 11, 16 gezeigt, die als Gateways der beiden lokalen Datennetze fungieren. Die Funktion der einzelnen Geräte im Netz und die Übertragung von Datenpaketen wird im folgenden beispielhaft nur in eine Richtung vom ersten lokalen Datennetz zum zweiten lokalen Datennetz beschrieben. Tatsächlich ist der Aufbau jedoch symmetrisch und unterstützt ebenso die Übertragung in die Gegenrichtung.

Die Datenpakete sind dabei nach dem Internet-Protokoll (IP-Protokoll) strukturiert. Das erste Datennetz besitzt einen ersten Router 10, der Datenpakete, die für das zweite Datennetz bestimmt sind an einen Ausgang leitet. Bei dem Ausgang handelt es sich um eine Ethernet-Schnittstelle für 100 Mbit/sec, z.B. vom Typ 100-BaseT gemäß IEEE 802.3. Eine solche Ethernet-Schnittstelle ist eine asynchrone Datenschnittstelle, da Datenpakete ohne zeitlichen Bezug zueinander gesendet und empfangen werden. Findet beim Senden eine Kollision mit Datenpaketen statt, die von einem anderen Sender zeitgleich auf die gleiche Datenleitung ausgesendet wurden, so wird dieser Zustand durch die sendenden Schnittstellenschaltungen erkannt und das kollidierte Datenpaket wird nach einer zufälligen Zeitspanne erneut gesendet. Dadurch wird eine erneute Kollision unwahrscheinlich. Man spricht von einer asynchronen Datenübertragung mit Kollisionserkennung. Häufig sind solche Datenpakete nach dem Internetprotokoll (IP) strukturiert. Die Erfindung ist jedoch auch auf andere Protokolle vorzugsweise für lokale Datennetze wie z.B. das IPX-Protokoll der Fa. Novell NetWare Corporation anwendbar.

Als Zugang für die Datenübertragung über das synchrone digitale Nachrichtenübertragungsnetz SDH 13 dient ein Multiplexer 12, der Teil des Nachrichtenübertragungsnetzes SDH ist.

Der Multiplexer 12 besitzt wie der Router 10 eine Ethernet-Schnittstelle und empfängt an dieser Schnittstelle die Datenpakete, die über das synchrone digitale Nachrichtenübertragungsnetz SDH zu dem zweiten lokalen Datennetz transportiert werden sollen. Router 10 und Multiplexer 12 sind mit einer asynchronen Datenleitung verbunden, die gemäß IEEE 802.3 für eine maximale Übertragungsrate von 100 Mbit/sec ausgelegt ist, z.B. eine sogenannte Twisted-Pair-Leitung. Der Multiplexer und der Router können alternativ auch in einem einzigen Netzelement integriert sein, welches über eine asynchrone Datenleitung an ein lokales Datennetz angeschlossen ist.

Der Multiplexer 12 schaltet für die vom Router 10 stammenden Datenpakete unter Verwendung einer Verkettung von N virtuellen Containern eine transparente Bridge durch das synchrone digitale Nachrichtenübertragungsnetz SDH 13 zu einem zweiten Multiplexer 14, der in diesem Falle als Demultiplexer arbeitet. Der zweite Multiplexer 14 ist wieder über eine asynchrone Datenleitung 15 an den zweiten Router 16 des zweiten lokalen Datennetzes angeschlossen und leitet Datenpakete, die er über die transparente Bridge von dem ersten Multiplexer 12 empfängt an den zweiten Router 16 weiter.

In Figur 2 ist ein logisches Blockdiagramm des ersten Multiplexers dargestellt, bei dem die in ITU-T übliche Notation verwendet wurde. An der asynchronen Schnittstelle 20 empfängt der Multiplexer asynchrone Datenpakete. Die Schnittstelle ist mit einer Schaltung 21 zum Einrichten der Bridge verbunden. Ein Ausgang der Schaltung 21 ist über eine Verbindung 22 mit einer ersten Multiplexeinrichtung 23 verbunden. Ein Ausgang der ersten Multiplexeinrichtung 23 ist über eine Verbindung 24 mit einer ersten Netzabschlußschaltung 25 verbunden. Ein Ausgang der ersten Netzabschlußschaltung 25 ist mit einem Eingang einer zweiten Multiplexeinrichtung 26 verbunden. Ein Ausgang der zweiten Multiplexeinrichtung 26 ist mit einer zweiten Netzabschlußschaltung 27 verbunden. Über die synchrone Schnittstelle 28 ist der Ausgang der zweiten Abschlußschaltung 27 an das synchrone digitale Nachrichtenübertragungsnetz 29 angeschlossen.

Die Funktionen der einzelnen Schaltungsteile sind folgende: An der Schnittstelle 20 werden asynchrone Datenpakete empfangen, die nach dem Internetprotokoll strukturiert sind. In diesem ersten Ausführungsbeispiel handelt es sich um eine Ethernetschnittstelle vom Typ 100baseT, die für eine maximalen Übertragungsrate von 100 Mbit/sec ausgelegt ist. Die Schaltung 21 zum Einrichten der Bridge simuliert eine transparente Verbindung für diese Datenpakete, indem sie den empfangenen Datenstrom mit einem internen Takt neu taktet und zeitliche Lücken zwischen den Datenpaketen mit einem Füllmuster auffüllt. Im ersten Ausführungsbeispiel wird als Füllmuster hex00 verwendet. Dadurch entsteht ein zeitlich konstanter Datenstrom, in dem die Phasenbeziehungen der Datenpakete untereinander erhalten bleiben. Der interne Takt ist dabei so gewählt, daß der gebildete Datenstrom eine Bitrate hat, die der Gesamtkapazität der zur Übertragung genutzten Verkettung entspricht. In der Schaltung 21 kann zusätzlich auch noch eine weitere Protokollebene eingeführt werden, indem z.B. die IP-Pakete entsprechend PPP (point-to-point protocol) in HDLC-Rahmen verpackt werden.

In der ersten Multiplexschaltung 23 wird die Verkettung der virtuellen Container gebildet. Im ersten Ausführungsbeispiel werden 17 virtuelle Container vom Typ VC-2 miteinander zu einer virtuellen Verkettung VC-2-17v verkettet. In den Nutzlastbereich der verketteten virtuellen Container wird der von der Schaltung 21 gelieferte Datenstrom verpackt.

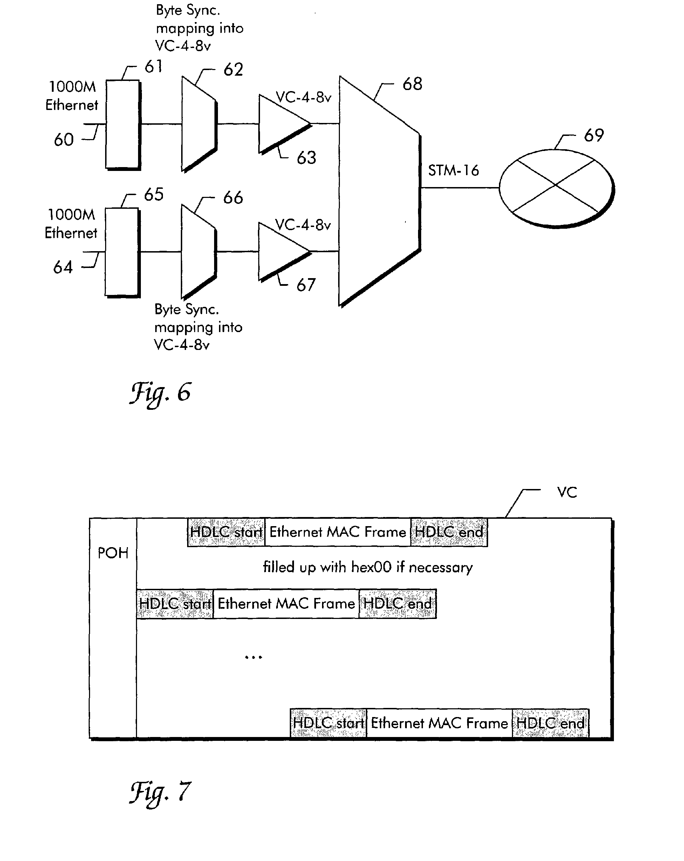

Ein Beispiel für die Strukturierung des durch dieses Mapping entstandenen Nutzlastbereiches wird weiter hinten anhand der Figur 7 besprochen.

Die erste Netzabschlußschaltung 25 bildet den Netzabschluß für den durch diese Verkettung im synchronen digitalen Übertragungsnetz 29 definierten Pfad. Sie erzeugt Oberheadbytes für den POH (path overhead) eines jeden der 17 verketteten virtuellen Container VC-2.

In der zweiten Multiplexschaltung 26 werden die 17 VC-2 der Verkettung mit weiteren Multiplexeinheiten entsprechend der in ITU-T G.707 Kapitel 6.1 (03/96) beschriebenen Multiplexhierarchie zu einem virtuellen Container vom Typ VC-4 verschachtelt. In einen VC-4 können insgesamt 21 VC-2 gepackt werden. Es können somit noch 4 VC-2, 12 VC-12 oder 16 VC-11 zusätzlich zu der Verkettung in den VC-4 gepackt werden.

Die zweite Netzabschlußschaltung 27 terminiert den durch den VC-4 im Übertragungsnetz definierten Pfad und bildet einen Übertragungsrahmen vom Typ STM-1, in den sie den VC-4 einpackt. Der Übertragungsrahmen wird dann über das synchrone digitale Nachrichtenübertragungsnetz 29 gesendet.

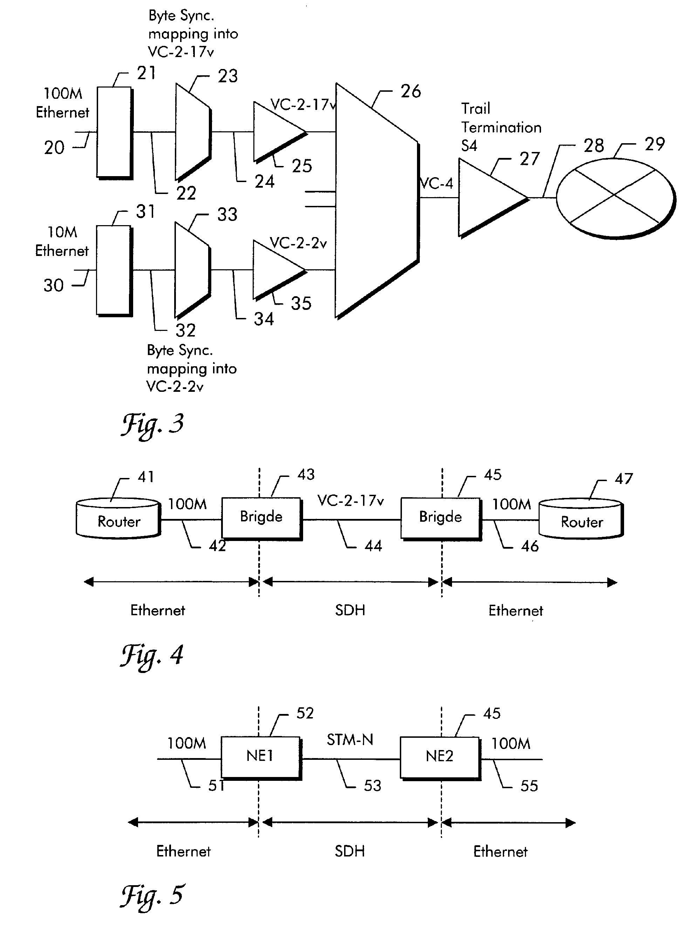

In Figur 3 ist als zweites Ausführungsbeispiel eine vorteilhafte Weiterbildung des in Figur 2 gezeigten Multiplexers gezeigt. Hierbei sind gleiche Elemente mit gleichen Bezugszeichen versehen. Gegenüber dem ersten Ausführungsbeispiel weist der Multiplexer zusätzlich eine zweite Schnittstelle 30 für asynchrone Datenpakete auf. Es handelt sich um eine Ethernetschnittstelle vom Typ 10baseT, die für eine maximale Übertragungsrate von 10 Mbit/sec ausgelegt ist. An die zweite Schnittstelle 30 ist eine zweite Schaltung 31 zum Einrichten einer zweiten Bridge angeschlossen. Die Schaltung 31 ist über die Verbindung 32 mit einer weiteren Multiplexschaltung 33 verbunden, die über die Verbindung 34 an eine weitere Netzabschlußschaltung 35 angeschlossen ist. Die Netzabschlußschaltung 35 ist ebenfalls an die zweite Multiplexschaltung 26 angeschlossen.

In dieser Weiterbildung wird zusätzlich zu der ersten transparenten Bridge, die mittels der 17 verketteten VC-2 eingerichtet ist, eine zweite transparente Bridge für eine zweite asynchrone Datenleitung geschaltet. Da die zweite Datenleitung eine maximale Bitrate von 10 Mbit/sec unterstützt, wird für die zweite Bridge eine Verkettung VC-2-2v von zwei virtuellen Containern VC-2 verwendet. Es ist sofort ersichtlich, daß somit beide Verkettungen in den Nutzlastbereich eines VC-4 verschachtelt werden können, da dieser ja 21 VC-2 aufnehmen kann. Es ist ebenfalls sofort ersichtlich, daß zusätzlich noch eine dritte transparente Bridge für eine zweite 10Mbit-Datenleitung eingerichtet werden könnte. Abgesehen von der Anzahl der verketteten Container wird die zweite transparente Bridge analog zur ersten eingerichtet.

In den Figuren 4 und 5 sind logische Sichten auf eine erfindungsgemäß eingerichtete Bridge am Beispiel einer 100Mbit/sec-Verbindung gezeigt. Figur 4 zeigt dabei zunächst die Sicht vom Blickpunkt des asynchronen Datennetzes aus. Ein erster IP-Router 41 sendet Datenpakete, die nach dem Internetprotokoll strukturiert sind über eine asynchrone Datenleitung 42 vom Typ 100M-Ethernet an einen zweiten IP-Router 47. Zwischen dem ersten und dem zweiten IP-Router ist eine transparente Bridge über ein SDH-Netzwerk von einem ersten Netzwerkknoten 43 zu einem zweiten Netzwerkknoten 45 eingerichtet. In dem ersten Netzwerkknoten 43 werden die Datenpakete wie vorstehend erläutert in eine virtuelle Verkettung von 17 VC-2 verpackt und über das SDH-Netz 44 zu dem zweiten Netzknoten 45 transportiert, wo sie wieder ausgepackt und über die asynchrone Datenleitung 46 zu dem zweiten IP-Router 47 weitergeleitet werden.

Physikalisch besteht zwischen dem ersten Router 41 und dem ersten Netzknoten 43 sowie zwischen dem zweiten Netzknoten 45 und dem zweiten Router 47 eine Ethernet-Verbindung während die beiden Netzknoten über das SDH-Netz 44 verbunden sind, über das die Verkettung der 17 VC-2 übertragen wird. Aus Sicht des Datennetzes besteht zwischen den beiden Netzknoten 43 und 45 jedoch eine Bridge über die die Datenpakete transparent übertragen werden.

Aus Sicht des synchronen Transportnetzes (Figur 5) werden zwischen zwei Netzelementen 52, 54 synchrone Transportmodule STM-N (N=1, 4, 16, oder 64) ausgetauscht. In diesen Transportmodulen werden entsprechend der Multiplexhierarchie von SDH verschachtelte virtuelle Container VC-2 transportiert, die miteinander zu einer Verkettung VC-2-17v verkettet sind. Die Netzknoten können entweder direkt oder über zwischengeschaltete Netzelemente miteinander verbunden sein. In letzterem Fall werden die Transportmodule in den zwischengeschalteten Netzelementen jeweils terminiert und neu erzeugt, wobei sie je nach Netzkonfiguration auch umgepackt werden können. Die virtuelle Verkettung repräsentiert dabei einen Pfad durch das SDH-Netz. Bei den Netzelementen kann es sich z.B. um sogenannte Add/Drop-Multiplexer oder digitale Crossconnects handeln.

Die beiden Netzelemente 52, 54 besitzen jeweils eine Schnittstelle, die mit einer asynchronen Datenleitung 51, 55 verbindbar ist und die als Zubringerschnittstellen für die zu transportierenden Nutzdaten dienen. Das erste Netzelement empfängt über seine Zubringerschnittstelle IP-Pakete, die es als Nutzlast in die virtuelle Verkettung packt. In dem zweiten Netzelement wird die Nutzlast wieder aus den vom ersten Netzelement empfangenen virtuellen Containern der Verkettung entnommen und an dessen Zubringerschnittstelle gesendet.

Bislang wurde lediglich eine Richtung der Übertragung betrachtet. In der Regel findet jedoch zwischen zwei Datennetzen ein bidirektionaler Verkehr statt. Für eine bidirektionale Datenübertragung kann das sogenannte Full-Duplex-Verfahren eingesetzt werden, bei dem je eine asynchrone Datenleitung für die Hin- und die Rückrichtung vorgesehen ist. Entsprechend wird für jede der beiden asynchronen Datenleitungen unter Verwendung einer Verkettung von virtuellen Containern ein Pfad im synchronen Übertragungsnetz eingerichtet. Dabei dient ein Pfad für die Hin-, der andere für die Rückrichtung.

Alternativ kann auch nur eine asynchrone Datenleitung vorgesehen sein, über die die Datenpakete bidirektional übertragen, Kollision von Datenpaketen erkannt und kollidierte Datenpakete erneut gesendet werden. In dem synchronen digitalen Nachrichtenübertragungsnetz wird daher für die Gegenrichtung ein zweiter Pfad eingerichtet. Dieser zweite Pfad ist ebenfalls mittels einer Verkettung virtueller Container realisierbar. Dabei ist zu beachten, daß die asynchronen Datenleitungen für eine Gesamtübertragungsrate von beispielsweise 100 Mbit/sec ausgelegt sind, wobei Datenaufkommen beider Seiten zur Gesamtübertragungsrate aufsummieren. Die beiden virtuellen Verkettungen sind demnach so auszulegen, daß die Summe der beiden Übertragungsrichtungen in etwa der maximalen Datenrate der asynchronen Datenleitung entspricht, bei symmetrischen Datenaufkommen also z.B. durch zwei VC-2-8v. Die Gesamtzahl der verketteten Container beider Verkettungen sollte also so gewählt werden, daß die resultierende Übertragungskapazität der verketteten Container im wesentlichen der maximalen Übertragungsrate der asynchronen Datenleitung entspricht.

Vorteilhaft kann in dem Multiplexer auch eine Kompressionsfunktion implementiert werden, so daß die Anzahl der verketteten Container dem mittleren erwarteten Datenaufkommen an IP-Paketen entspricht. Die mittels der Verkettung eingerichtete Bridge kann auch durch Änderung der Anzahl verketteter Container dynamisch an das aktuelle Datenaufkommen angepaßt werden, wobei das aktuelle Datenaufkommen entweder durch Zählen der Datenpakete bestimmt werden oder als mittleres statistisches Datenaufkommen vorbekannt sein kann.

In Figur 6 ist ein weiteres Ausführungsbeispiel dargestellt. Dabei handelt es sich um ein SDH-Netzelement, das gleichzeitig zwei transparente Bridges für zwei 1000Mbit/sec-Ethernet-Leitungen schaltet. An den beiden Eingängen 60 und 64 werden jeweils die asynchronen Datenpakete von den beiden asynchronen Datenleitungen empfangen. Analog zu Figur 3 ist für jede der Datenleitungen eine Schaltung 61, 65 zum Einrichten der Bridge vorgesehen. In den Schaltungen 61 und 65 werden die empfangenen Datenpakete auf den internen Systemtakt neu getaktet und zeitliche Lücken zwischen den Datenpaketen mit dem Füllmuster (z.B. hex00) aufgefüllt. Die Schaltungen 61 und 65 sind jeweils mit einer ersten Multiplexeinrichtung 62, 66 verbunden. Die ersten Multiplexeinrichtungen erzeugen jeweils eine virtuelle Verkettung von acht VC-4 und packen die von den Schaltungen 61, 65 empfangenen Datenströme in die Nutzlastbereiche der acht VC-4 ein. Die beiden ersten Multiplexschaltungen 62, 66 sind jeweils an eine Netzabschlußschaltung 63, 67 angeschlossen, die die Oberheadbytes für den POH (path overhead) eines jeden der acht verketteten virtuellen Container VC-4 erzeugen. Die beiden Netzabschlußschaltungen 63, 67 führen zu einer zweiten Multiplexeinrichtung, welche durch byteweises Verschachteln der empfangenen Datenströme und durch Hinzufügen eines entsprechenden Kopfabschnittes einen Übertragungsrahmen vom Typ STM-16 erzeugt und in das synchrone Übertragungsnetz 69 sendet.

In Figur 7 ist das verwendete byte-synchrone Mapping der IP-Pakete in den Nutzlastbereich der virtuellen Container beispielhaft dargestellt. Der virtuelle Container VC besteht aus einem Nutzlastbereich und einem als Path Overhead POH bezeichneten Kopfabschnitt. In den Nutzbereich sind IP-Pakete verpackt. Dargestellt sind drei solche IP-Pakete. Zwischen den IP-Paketen ist als Füllmuster hex00 eingefügt. Bei den IP-Paketen handelt es sich um übliche Ethernet-MAC-Rahmen (MAC: Medium Access Control). Diese sind zusätzlich noch von einem HDLC-Rahmen umgeben, der es ermöglicht, Anfang und Ende der IP-Pakete festzustellen. Anzumerken ist hierzu noch, daß die IP-Pakete nicht notwendig vollständig im Nutzlastbereich eines virtuellen Containers enthalten sein müssen. Da erfindungsgemäß eine virtuelle Verkettung von Containern verwendet wird, kann ein IP-Paket im Nutzlastbereich eines ersten Containers beginnen und erst im Nutzlastbereich des in der Verkettung angrenzenden Containers enden. Dies wird erst durch die Verkettung und durch das beschriebene byte-synchrone Mapping möglich, im Gegensatz z.B. zur Nutzung mehrerer unabhängiger paralleler Pfade, wo ein solches Aufteilen eines einzelnen Paketes auf mehrere Container nicht möglich wäre.

Alternativ zu den in den Ausführungsbeispielen beschriebenen Verkettungen sind auch andere Verkettungen möglich. So wäre eine virtuelle Verkettung von 15 oder 16 VC-2, d.h. VC-2-15v oder VC-2-16v ebenso geeignet für eine transparente Bridge für 100 Mbit/sec Ethernet. Eine solche Verkettung würde im Gegensatz zu der beschriebenen Verkettung von 17 VC-2 der Tatsache Rechnung tragen, daß auf einer Ethernet-Leitung meist nicht die volle, zur Verfügung stehende Bandbreite genutzt wird. So könnte sich die Verkettung VC-2-15v sogar als Optimum für 100Mbit Ethernet erweisen. Eine andere mögliche Verkettung ist VC-3-2v für 100Mbit Ethernet, d.h. die virtuelle Verkettung von zwei VC-3.

Auch für das zur Zeit in der Entwicklung befindliche 10Gbit Ethernet kann das erfindungsgemäße Verfahren zukünftig eingesetzt werden. Für 10Gbit Ethernet ist eine virtuelle Verkettung von 64 VC-4, d.h. VC-4-64v vorteilhaft. Ebenso kann eine virtuelle Verkettung von 4 nahtlosen Verkettungen VC-4-16c eingesetzt werden, d.h. 16 VC-4 werden nahtlos verkettet und anschließend wird eine virtuelle Verkettung von vier solchen nahtlosen Verkettungen gebildet: VC-4-16c-4v.

Die in den Ausführungsbeispielen erläuterten Schaltungen können vorteilhaft in einer einzigen integrierten Schaltung ausgeführt sein, beispielsweise einem ASIC. Alternativ ist es auch möglich, die Funktionen der einzelnen Schaltungen als Softwaremodule für eine prozessorgesteuerte Schaltung auszuführen. Ebenso sind Kombinationen denkbar, in denen Schaltungsteile als ASIC realisiert sind, andere als Softwaremodule.

## Patentansprüche

1. Verfahren zum Übertragen von asynchronen Datenpaketen über ein synchrones digitales Nachrichtenübertragungsnetz, bei dem
- die Datenpakete über eine asynchrone Datenleitung empfangen werden, die eine vorgegebene maximale Übertragungsrate unterstützt,
- bei dem die Datenpakete in virtuelle Container verpackt werden und die virtuellen Container gemäß einer Multiplexhierarchie in einem Übertragungsrahmen verschachtelt übertragen werden, in dessen Nutzlastbereich sie frei positionierbar sind und von einem Zeiger adressiert werden,
**dadurch gekennzeichnet,**daß
- die Datenpakete in eine Anzahl virtueller Container gleicher Größe verpackt und die Container miteinander verkettet werden, wobei die Anzahl nach der Bedingung festgelegt wird, daß die resultierende Übertragungskapazität der verketteten Container im wesentlichen der maximalen Übertragungsrate der asynchronen Datenleitung entspricht und
- die Datenpakete byte-synchron in die Nutzlastbereiche der verketteten virtuellen Container gepackt werden und freie Datenbytes in den Nutzlastbereichen zwischen den Datenpaketen mit einem vorgegebenen Füllmuster gefüllt werden.

2. Verfahren nach Anspruch 1, bei dem die asynchrone Datenleitung eine Ethernet-Leitung nach IEEE 802.3 ist und die Datenpakete nach dem Internetprotokoll strukturiert sind.

3. Verfahren nach Anspruch 1, bei dem die Container virtuell verkettet werden.

4. Verfahren nach Anspruch 1, bei dem die maximale Übertragungskapazität der asynchronen Datenleitung 10 Mbit/sec beträgt und zur Übertragung eine Verkettung von zwei virtuellen Containern vom Typ VC-2 verwendet wird.

5. Verfahren nach Anspruch 1, bei dem die maximale Übertragungskapazität der asynchronen Datenleitung 10 Mbit/sec beträgt und zur Übertragung fünf virtuell verkettete Containern vom Typ VC-12 verwendet werden.

6. Verfahren nach Anspruch 1, bei dem die maximale Übertragungskapazität der asynchronen Datenleitung 100 Mbit/sec beträgt und zur Übertragung eine Verkettung von fünfzehn, sechzehn oder siebzehn virtuellen Containern vom Typ VC-2 verwendet wird.

7. Verfahren nach Anspruch 1, bei dem die maximale Übertragungskapazität der asynchronen Datenleitung 100 Mbit/sec beträgt und zur Übertragung zwei virtuell verkettete Containern vom Typ VC-3 verwendet werden.

8. Verfahren nach Anspruch 1, bei dem die maximale Übertragungskapazität der asynchronen Datenleitung 1 Gbit/sec oder 1000 Mbit/sec beträgt und zur Übertragung eine Verkettung von acht virtuellen Containern vom Typ VC-4 verwendet wird.

9. Verfahren nach Anspruch 1, bei dem die maximale Übertragungskapazität der asynchronen Datenleitung 10 Gbit/sec oder 10.000 Mbit/sec beträgt und zur Übertragung eine Verkettung von vierundsechzig virtuellen Containern vom Typ VC-4v verwendet wird.

10. Verfahren nach Anspruch 1, bei dem die maximale Übertragungskapazität der asynchronen Datenleitung 10 Gbit/sec oder 10.000 Mbit/sec beträgt und zur Übertragung eine Verkettung von sechzehn virtuellen Containern vom Typ VC-4-4cv verwendet wird.

11. Verfahren nach Anspruch 1, bei dem die maximale Übertragungskapazität der asynchronen Datenleitung 10 Gbit/sec oder 10.000 Mbit/sec beträgt und zur Übertragung eine Verkettung von vier virtuellen Containern vom Typ VC-4-16cv verwendet wird.

12. Verfahren nach Anspruch 1, bei dem die maximale Übertragungskapazität der asynchronen Datenleitung 10 Gbit/sec oder 10.000 Mbit/sec beträgt und zur Übertragung eine Verkettung von vier virtuellen Containern vom Typ VC-4-64c verwendet wird.

13. Verfahren nach Anspruch 1, bei dem über die asynchrone Datenleitung Datenpakete bidirektional übertragen werden, bei dem je eine Verkettung virtueller Container für die Hin-Richtung und die Rückrichtung verwendet wird und bei dem die Gesamtzahl der verketteten Container beider Verkettungen nach der Bedingung festgelegt wird, daß die resultierende Übertragungskapazität der verketteten Container im wesentlichen der maximalen Übertragungsrate der asynchronen Datenleitung entspricht.

14. Verfahren nach Anspruch 1, bei dem über die asynchrone Datenleitung im Full-Duplex-Verfahren Datenpakete übertragen werden, bei dem je eine Verkettung virtueller Container für die Hin-Richtung und für die Rückrichtung verwendet wird und bei dem die Gesamtzahl der verketteten Container in jeder Richtung nach der Bedingung festgelegt wird, daß die resultierende Übertragungskapazität der verketteten Container im wesentlichen der maximalen Übertragungsrate der asynchronen Datenleitung in einer Richtung entspricht.

15. Verfahren nach Anspruch 1, bei dem die Anzahl der verketteten Container so gewählt wird, daß die Übertragungskapazität der Verkettung dem mittleren erwarteten Datenaufkommen an Datenpaketen entspricht.

16. Verfahren nach Anspruch 1, bei dem die Anzahl verketteter Container dynamisch an das aktuelle Datenaufkommen angepaßt wird, wobei das aktuelle Datenaufkommen entweder durch Zählen der Datenpakete bestimmt wird oder als mittleres statistisches Datenaufkommen vorbekannt ist.

17. Multiplexer für ein synchrones digitales Nachrichtenübertragungsnetz mit
- einer an eine asynchrone Datenleitung anschließbaren ersten Schnittstelle zum Empfangen von asynchronen Datenpaketen mit einer maximalen Übertragungsrate die von der asynchronen Datenleitung unterstützt wird,
- einer ersten Multiplexschaltung zum Verpacken der Datenpakete in virtuelle Container,
- mit einer zweiten Multiplexschaltung zum Verschachteln der virtuellen Container gemäß einer Multiplexhierarchie in einem Übertragungsrahmen, in dessen Nutzlastbereich sie frei positionierbar sind und von einem Zeiger adressiert werden, und
- einer zweiten Schnittstelle zum Anschluß an das synchrone digitale Nachrichtenübertragungsnetz,
**dadurch gekennzeichnet, daß**
die Multiplexschaltungen angepaßt sind, die Datenpakete byte-synchron in Nutzlastbereiche einer Anzahl virtueller Container gleicher Größe zu verpacken und die Container miteinander zu verketten, wobei die Anzahl nach der Bedingung festgelegt wird, daß die resultierende Übertragungskapazität der verketteten Container im wesentlichen der maximalen Übertragungsrate der asynchronen Datenleitung entspricht und freie Datenbytes in den Nutzlastbereichen zwischen den Datenpaketen mit einem vorgegebenen Füllmuster gefüllt werden.
